# EUROPEAN PATENT APPLICATION

(11) **EP 2 008 555 A1**
(43) Date of publication of application: **31.12.2008**
(21) Application number: 07704741.3
(22) Date of filing: 24.01.2007
(51) Int. Cl.: A47J 36/02, A47J 27/21, A47J 31/24, A47J 31/30

(54) **INFUSION-MAKING DEVICE**

(30) Priority: 01.02.2006 ES 200600215
(71) Applicant: CESPEDES CIVICO, Francisco Javier, E-08025 Barcelona (ES); BRAVO BUSTAMANTE, Andrés, E-08016 Barcelona (ES); CESPEDES ASENSIO, Francisco, E-08025 Barcelona (ES)
(72) Inventor: CESPEDES ASENSIO, Francisco, E-08025 Barcelona (ES)
(86) International application number: PCT/ES2007/000027
(87) International publication number: WO 2007/088224

(57) **Abstract**

Device for elaborating infusions in a microwave oven, being made completely from materials suitable for the microwave usage and including an area of mixture of water with infusion extract and/or heating of that water, and an area of reception of the prepared infusion, presenting the device, externally, and at least partially, an area of double wall, **characterised by** the arrangement of opening systems through pressure between the area of heating and the area of mixture.

## Description

The current invention refers to a device for the infusion production.

In particular, the current invention refers to a device of infusion production, like coffee, which presents characteristics of innovation and inventive activity.

Nowadays, the procedures used to make infusions, in general, and regarding coffee in particular, vary from its boiling of the product with water in open containers (exposed to atmospheric pressure) to processes of obtaining the extracts though the use of hot water and, or steam pressure. Those procedures are applied to the products that contain the extracts of the infusion, both in crumbled or ground state, or else applied to the mentioned procedures as of the products pre-elaborated by industry such as, for example, soluble coffees or instantaneous coffees.

The common characteristics to the traditional methods consist in an external generated heat that is transmitted to the water through conduction and, or convection -that is produced by a mixture of the desired product for the infusion and the water, whether it is cold or it is conducted -or its vapour- through the product by pressure- and the solid part of the product remains blocked in a filter.

Also, coffee pots or containers made of inert material in respect to the microwaves are also known, and these do keep the operative procedure and characteristics above cited. Therefore, they present a number of technical disadvantages that make their usage difficult, since they can be adapted to the different heating system neither by microwaves nor to the special dimensional characteristics of a microwave oven.

In order to solve the disadvantages described, the current invention consist in a device for the production of infusions, of the type which is totally made of inert materials respect to the microwaves and that is compound by an area for the mixture of the water with the infusion extract and possibly the heating of the water itself and an area of reception of the infusion elaborated, presenting, in its outer side, at least in a partial way, an area of double wall. It is characteristic of this invent that the area of water heating will communicate with the area of mixture of the extract and the boiled water through opening system that work by pressure placed between both areas, as for example an elastic flap, which will make the production of infusions by pressure possible, what achieves a better results regards of the tasting properties.

Thanks to the double wall, it is possible to manage the device of infusion production after its heating in a microwave oven, as well as to keep the heat of the infusion made in a microwave oven.

Preferably, the device will present a handle that may make easier for the user the consumption of the infusion prepared directly from the device.

The handle allows the consumption of the infusion prepared directly from the device, so there is a success in taking advantage of the properties of the heating, because a direct heating of the material compounding the device during the irradiation is not produced -and also, because of having a double wall that keeps the temperature of the outer side-.Thus the infusion prepared can be consumed directly from the device of infusion production, regarding the current invention.

In order to take more advantage of that characteristic of the device object of the current invention, the volume of the reception of the infusion prepared area will correspond to a dose of infusion, that is to say, the device will be able to be preferably a one-dose or individual usage.

In a preferred realization, the device will have separated areas of water heating, extract-water mixture and infusion reception. In a possible preferred realization, the heating area will coincide with the space compressed in between the double wall. Even in a more preferred realization, it will be able to have a filter and an anti-return system between the extract-water mixture area and the infusion reception area. The anti-return system may include, for instance, an anti-return throttle.

Other preferred realizations may include throttles of unload to the exterior of the opening controlled by pressure, that connects, for instance, directly with the areas of water heating, in such a way that fractures due to the overheating of the infusion may be avoided.

In other preferred realization alike, the reception are of the prepared infusion will be separable from the inside part of the device, most preferably being found the handle in that area of the infusion reception.

The device will include, as well, an area of mixture of the water and the extract separated, through a filter barrier, from an area of reception of the infusion, coinciding the mixture area with the heating one. For example, the device may be constituted by two parts, defining the lower part the area of mixture of water and infusion extract and the heating of water in the same space, and defining the upper part with the reception of the infusion area equipped with the handle to consume the infusion directly from the upper part itself, arranging a filter between both the upper and the lower parts. Or else, for instance, the device may be constituted by three parts arranged one on the top of the other -the first part provided with the handle for the infusion consumption, a second part that defines the space in which the mixture of the water and the infusion extract and the heating of it, and a third part that defines a channel of evacuation of the infusion provided with the filter, so that it is possible, once boiled the heated the mixture, to separate the lower part from the rest of the device and pour out through the channel of evacuation the infusion coming from the mixture and heating area to the reception are of the infusion defined in the first lower part.

In order to help the understanding of the invention constitution and procedures, drawings from some possible realizations of the current invention have been attached as a mode of explanatory example, though not restrictive.

*Figure 1* is the view of a sectioned lateral perspective, according to a radial symmetrical shot, of the realization of the device of infusion production for microwave oven which the current invention presents.

*Figure 2* is the view of a sectioned lateral perspective, according to radial symmetrical shot of another realization of the device of infusion production for microwave oven which the current invention presents.

*Figure 3* is, again, the view of a sectioned lateral perspective, according to radial symmetrical shot of another realization of the device of infusion production for microwave oven which the current invention presents, which keeps a high number of similarities with the two previous realizations.

*Figure 4* is the explosioned view in section of the different parts that constitute the realization of the *figure 3*, in which the filling procedure of the coffee pot can be appreciated.

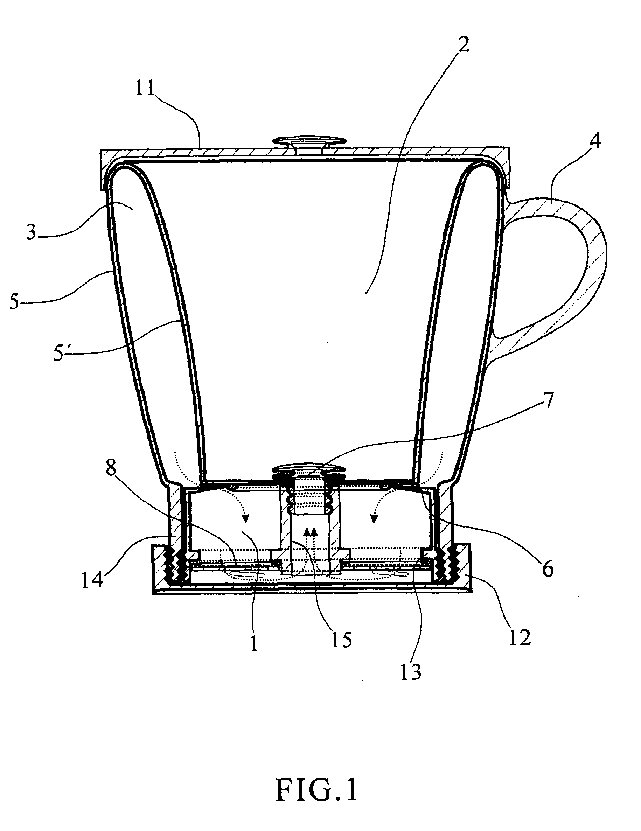

In *figure 1*, a device of production of infusions in microwave oven can be appreciated regarding the current invention, in particular a coffee pot, wholly made of materials suitable to be used in a microwave oven and which covers an area -1-of mixture of the water with the extract of the infusion (for instance, coffee) and another area -2- of reception of the already prepared infusion, which presents in its outer side double wall area -5-, -5'- surrounding the area of reception of the infusion -2-. The performed realization presents, moreover, a handle -4-, located in the reception of the infusion area, that makes possible the consumption of the prepared infusion directly from the device, without the need to make an in between step of pouring out the prepared infusion into an independent container, like a cup. The device in *figure 1* present a shape of a common cup provided with an extractable cover -11- in its upper area and the space -2- can include in a preferred realization the necessary volume for a single dose of infusion. The shown example, moreover, presents an independent area -3- for the heating of the water before its mixture with the extract of the infusion in the area -1-. In this example, that area -3- coincides with the space of the double wall -5-, -5'-. Between the heating area -3- and the mixture area -1- some opening systems can be arranged to communicate both areas, and they may be opened by pressure, like an elastic flap -6-. This way, when the device is put in a microwave oven, the heating of the water provokes an increase of the pressure that makes the elastic flap -6- to yield and give way to the water towards the mixture area -1-, following the flow indicated by the pointed rows represented in *figure 1*. In the shown realization of that figure, between the mixture area -1- and the reception area -2- a filter -8-, a channel -15- and an anti-return system -for instance an anti-return throttle -7- - are arranged. The body of the device is constituted by different parts - 12-, -13-, -14- twisted one to the other and forming the elements of the device.

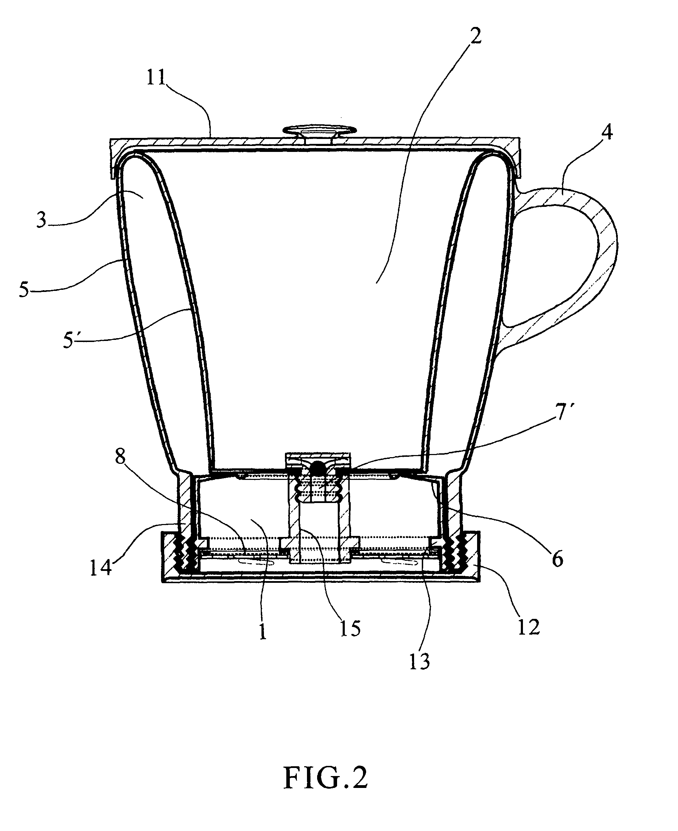

*Figure 2* shows another utterance very similar to the previous one, in which the elements are the same as those from *figure 1* and have been designated the same numbers. However, the example performed in this figure has been provided a ball throttle -7- at the end of the channel -15- which prevents the return of the liquid from the area of reception -2- down to the area of mixture -1- through the channel -15-.

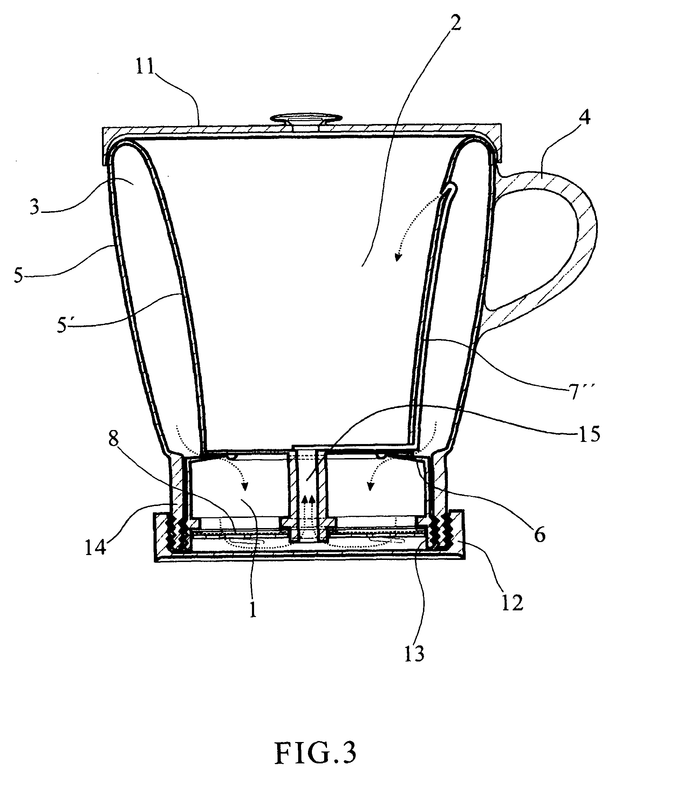

*Figure 3* shows another similar realization to the previous ones which, again, differs from the other two only in the anti-return system. In this case the anti-return system is constituted by a conduct -7'-, preferably narrow, that flows into the upper area of reception, in such a way that it restricts the quantity of infusion that can return to that contained in the conduct -7"-.

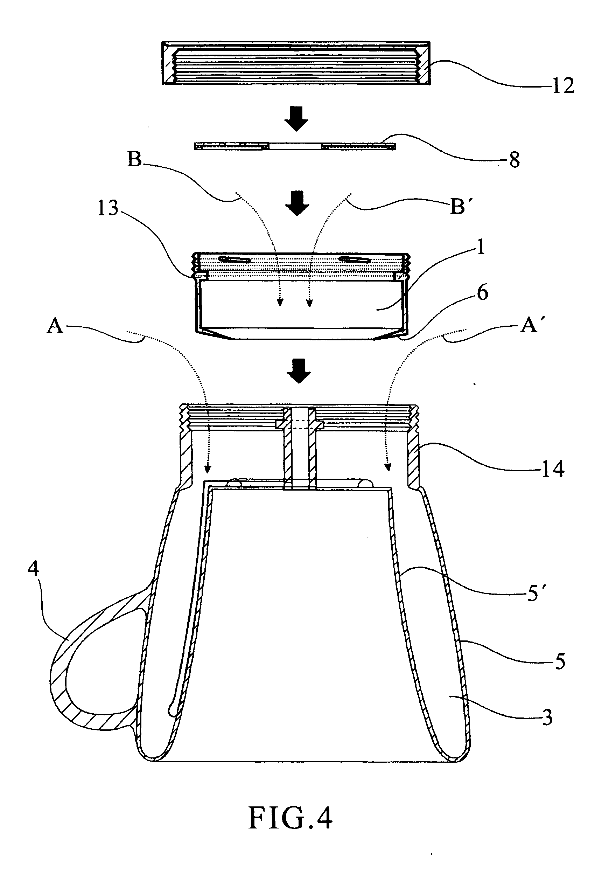

*Figure 4* shows the parts -12, -13, -14- that constitute the body of the realization of the device in *figure 3*. In this arrangement it can be appreciated the procedure of filling of the device before the production of the infusion. It is first filled with water in the space destined heating of the water -3-, included in the part -14-, and, once full, it is twisted to the part -13-. The filling of water has been represented using directing rows -A-, -A'-. Once twisted the part -13- to part -14-, we proceed to fill the space -1-, contained in part -13- with the extract of the infusion, for instance, coffee. Once filled the area -1- with the extract, the filter is placed -8- and the part -12-, which is the lower part of the device, is twisted. Once all these steps are made, it is only necessary to turn the device, put the cover on optionally -11- and put it into the microwave oven for the production of the infusion. Once the infusion is prepared, it will only be necessary to take off the cover and proceed to the consumption of it directly from the device.

It may be easily understood that, the devices in *figures 1* and *4* allow the realization of infusion by water pressure.

Another adding advantage of the realization of the figures lays in the fact that it may be commercialised by including the extract and the water that may produce the infusion later.

Despite it has not been showed in the figures, the empty space between the double wall will be preferably a structure constituted by fibers, sheets or ribbing material arranged with the aim of make the walls rigid in front of the mechanical efforts of manipulation and also mechanical and thermal efforts during the production of the infusion.

In addition, the cover -11-, the aim of which is not only to avoid spatters during the production of the coffee but also to keep the temperature of the infusion, could have an upper exit that may allow soothing the excess of pressure produced by the steam.

There exist a number of variations on the examples shown that may be evident to the experts in the subject and that may be understood like covered by the current invention. For example, it may be well understood in the current invention the combination of the characteristics between the different realizations performed.

## Claims

1. Device of production of infusions in a microwave oven, being made completely of suitable materials for microwave oven and including an area of mixture of water with infusion extract and/or heating of that water, and an area of reception of the prepared infusion, presenting the device, externally, and at least partially, an area of double wall, **characterised by** the possession of opening systems through pressure between the area of heating and the area of mixture.

2. Device, according to *claim 1*, **characterised** because it presents a handle that makes it possible for the user to consume the prepared infusion in the device directly from it.

3. Device, according to *claims 1* and *2*, **characterised by** the volume of the area of reception correspondence to a single dose of infusion.

4. Device, according to any of the *claims 1-3*, **characterised by** an area of reception of the prepared infusion which is separable from the rest of the device.

5. Device, according to any of the *claims 1-4*, **characterised by** a handle attached to the area of reception of the prepared infusion.

6. Device, according to any of the *claims 1-5*, **characterised by** the arrangement of an area of water heating by microwaves separated from the area of mixture with the extract of the infusion.

7. Device, according to *claim 6*, **characterised** b the coincidence of the area of the heating with the space in between the double wall.

8. Device, according to any of the *claims 1-7*, **characterised** because the mentioned opening systems include an elastic throttle.

9. Device, according to any of the *claims 1-8*, **characterised by** the arrangement of an anti-return system between the area of mixture and the area of reception of the elaborated infusion that blocks the flow of the liquid from the area of reception to the area of mixture.

10. Device, according to *claim 9*, **characterised by** an anti-return system consisting on an anti-return throttle.

11. Device, according to *claim 9*, **characterised by** an anti-return system consisting on a tube that flows into the upper part of the reception area.

12. Device, according to any of the *claims 1-11*, **characterised by** the arrangement of a filter between the area of mixture and the area of reception.

13. Device, according to any of the *claims 1-12*, **characterised by** the presence of an unload throttle to the exterior with an opening controlled by pressure.

14. Device, according to any of the *claims 1-13*, **characterised by** the arrangement of a cover in the upper part of the reception of the infusion area.

15. Device, according to any of the *claims 6-14*, **characterised by** the arrangement of elements twistable in their lower parts that allow filling of the heating area with water.

16. Device, according to any of the *claims 1-15*, **characterised by** the correspondence of the area of double wall with the one of the reception of the prepared infusion.
